Europäisches Patentamt

European Patent Office

Office européen des brevets

(19)

(11) EP 0 998 149 A1

(12) DEMANDE DE BREVET EUROPEEN

(43) Date de publication:
03.05.2000 Bulletin 2000/18

(51) Int Cl.⁷: **H04N 7/30**, H04N 17/00

(21) Numéro de dépôt: 99402620.1

(22) Date de dépôt: 22.10.1999

(84) Etats contractants désignés:
**AT BE CH CY DE DK ES FI FR GB GR IE IT LI LU
MC NL PT SE**
Etats d'extension désignés:
**AL LT LV MK RO SI**

(30) Priorité: **27.10.1998 FR 9813431**

(71) Demandeurs:
• **FRANCE TELECOM
75015 Paris (FR)**
• **TELEDIFFUSION DE FRANCE
75015 Paris (FR)**

(72) Inventeurs:
• **Pefferkorn, Stéphane
35000 Rennes (FR)**
• **Gicquel, Jean-Charles
35000 Rennes (FR)**
• **Alpert, Thierry
35235 Thorigne-Fouillard (FR)**
• **Wyckens, Emmanuel
35340 Liffre (FR)**

(74) Mandataire: **Fréchède, Michel
Cabinet Plasseraud
84, rue d'Amsterdam
F-75440 Paris Cédex 09 (FR)**

(54) **Procédé de contrôle de la qualité d'images numériques diffusées**

(57) L'invention concerne un procédé de contrôle de la qualité d'images numériques codées par blocs.

Le procédé consiste à détecter (B), suivant une direction de détection, entre couples de pixels consécutifs, la présence de faux contours potentiels sur une variable de luminance ou de chrominance, pour définir un masque des faux contours potentiels, à déterminer (C) dans la direction de détection par accumulation la présence d'une grille parasite sensiblement périodique et à déterminer (D) à partir de la quantité de faux contours constituant la grille parasite un facteur de qualité des images numériques.

Application à la diffusion d'images TV ou analogues.

IMAGE NUMÉRIQUE LIGNES ET COLONNES DE PIXELS Y, Cr, Cb. — A

FIG.1.

DÉTECTION SELON DIRECTION DE DÉTECTION DE PRÉSENCE DE FAUX CONTOUR POTENTIEL ENTRE DEUX PIXELS CONSÉCUTIFS.
MASQUE DES FAUX CONTOURS POTENTIELS. — B

DÉTECTION PAR ACCUMULATION DE GRILLE PARASITE. — C

DÉTERMINATION FACTEUR DE QUALITÉ IMAGE NUMÉRIQUE A PARTIR DE LA QUANTITÉ DE FAUX CONTOURS. — D

EP 0 998 149 A1

**Description**

L'invention concerne un procédé de contrôle de la qualité d'images numériques diffusées.

La multiplication des échanges d'informations dans notre société actuelle a amené les professionnels des techniques concernées, afin d'assurer une gestion efficace des installations existantes et la pérennité, au moins temporaire, de ces installations, à proposer des techniques de transmission d'informations très élaborées ayant, notamment, pour objet de réduire le débit de transmission des données support de ces informations, afin de faire face à l'expansion de ces échanges.

Parmi les techniques précitées, on peut mentionner les techniques de codage, lesquelles ont essentiellement pour objet une mise en forme adéquate de ces données en vue de leur transmission, ou leur télédiffusion, dans des conditions optimales.

De telles techniques ont en particulier été développées pour assurer la diffusion d'informations vidéo-numériques, sous forme de programmes TV télédiffusés par exemple.

Les procédés de codage employés par les services de télétransmission ou télédiffusion des programmes TV précités ont permis de réduire la quantité d'informations à transmettre dans des proportions importantes.

En contrepartie, cette réduction de quantité d'informations entraîne une perte irrémédiable de la qualité de l'image codée reçue, après décodage, par rapport à l'image source d'origine.

L'importance des défauts ou artefacts engendrés dépend à la fois du débit de codage alloué au codeur et de la complexité de l'image. Les défauts sont d'autant plus importants que l'image est complexe et véhicule des informations relatives au mouvement d'objets de cette image, à la luminosité, la texture ou autres paramètres.

Pour des raisons techniques et de responsabilité vis-à-vis du cahier des charges de télédiffusion, il est nécessaire d'évaluer de façon continue le niveau de qualité du signal vidéo-numérique support de ces images.

Des méthodes d'évaluation subjectives, telles que l'appréciation humaine, sont à l'heure actuelle largement utilisées. Ces méthodes sont toutefois lourdes à mettre en oeuvre et ne présentent pas un caractère de fiabilité suffisant.

Il est apparu souhaitable, en conséquence, de développer des procédés de mesure de qualité d'images automatiques.

Une première solution a pu consister à proposer un processus d'analyse différentielle entre une image de référence et une image dont on veut évaluer la qualité, en tenant compte du système visuel de perception humaine. Un tel mode opératoire présente l'inconvénient d'une solution peu pratique, dans la mesure où il est nécessaire de disposer d'une image de référence, voire de plusieurs.

En outre, la localisation de l'image de référence est parfois très différente de celle de l'image à évaluer. Dans ce cas, il existe un problème de transport de l'une des images vers l'autre.

Une deuxième solution, basée sur la connaissance a priori des défauts ou artefacts engendrés par la chaîne de codage/décodage, permet, par des méthodes statistiques, d'apprécier le niveau de qualité du signal reçu, après décodage, en mesurant le taux d'apparition de ces défauts ou artefacts.
En pratique, le défaut analysé correspond à un effet dit de faux contours engendré sur tout ou partie de l'image. En effet, au cours des processus de codage habituellement utilisés, par exemple à partir d'un codage par Transformée en Cosinus Discrète, ou DCT en langage anglo-saxon, le codage est effectué par blocs, l'image étant découpée sous forme de blocs d'images à partir d'une grille de taille fixe. Ces blocs d'images, ensembles de pixels, sont ensuite codés et quantifiés.

Lors du décodage de l'image, la distorsion spatiale entre blocs, plus ou moins bien reconstruits, fait apparaître des effets de faux contours horizontaux et/ou verticaux, dont la distribution sur l'image, non nécessairement régulière, est cependant liée à la distribution des blocs de codage sur l'image. L'existence de ces faux contours est une des causes majeures de défaut de qualité des images TV numériques télédiffusées.

Parmi les solutions ou tentatives de solution proposées pour assurer une telle mesure de qualité, on peut citer la publication de ITU/Telecommunication Standardization Sector Selections from the Draft American National Standard : *Digital transport of one-way signals-parameters for objective performance assessment.* Working Party 2/12, Question 22/12 (2/15 and 3/15) - May 1996.
Parmi celles-ci, la mise en oeuvre d'un processus de calcul de composantes spatiales d'images verticales et horizontales, par calcul d'une transformée de Fourier, sur des portions d'image carrées de dimension NxN s'est révélée trop lente. Confer point 6.1.2.

Une autre solution consiste à appliquer à chaque frontière de bloc de l'image reconstruite un processus de filtrage non linéaire dépendant de la visibilité de l'effet de faux contours. Le processus de filtrage non linéaire est établi à partir de données de perception psychovisuelles, tenant compte de la sensibilité au contraste de l'oeil humain. Confer l'article intitulé *"Reduction of blocking effect in DCT-coded images based on a visual perception criterion",* publié par François-Xavier COUDAUX, Marc GAZALET et Patrick CORLAY. Signal Processing : Image Communication 11 (1998) 179-186. Elsevier. Un tel procédé implique toutefois la connaissance a priori de la position et de l'importance, vis-à-vis de la perception visuelle, du phénomène des faux contours.

Enfin, un processus de correction des faux contours a en outre été proposé par Shanika A.KARUNUSEKARA et Nick G.KINGSBURG, Department of Engineering, Cambridge, CB2 1PZ, Royaume-Uni - SPIE vol. 2094, p.474 à 486. Toutefois, dans ce mode opératoire, la mise en évidence des faux contours implique le calcul d'un signal d'erreur entre l'image d'origine et l'image reconstruite.

La présente invention a pour objet de remédier aux inconvénients et limitations des procédés de l'art antérieur, en particulier par la suppression de toute image de référence, lors de la mise en oeuvre d'un procédé de contrôle de la qualité d'images numériques diffusées.

Un autre objet de la présente invention est en conséquence la mise en oeuvre d'un procédé de contrôle de la qualité d'images numériques diffusées, de type autodidacte, dans lequel la mise en évidence des faux contours est réalisée grâce à un processus sui generis autonome.

Un autre objet de la présente invention est la mise en oeuvre d'un procédé de contrôle de la qualité d'images numériques diffusées susceptible d'être effectué en temps réel, le temps de calcul des paramètres de qualité de cette image étant au maximum de l'ordre d'une période d'image.

Le procédé de contrôle de la qualité d'images numériques diffusées, objet de la présente invention, chaque image numérique étant codée par blocs sous forme de pixels d'image arrangés en lignes et en colonnes de pixels d'images, à chaque pixel d'image étant associée une variable de luminance et au moins deux variables de chrominance, est remarquable en ce qu'il consiste au moins à détecter, suivant au moins une direction de détection, entre chaque couple de pixels consécutifs selon cette direction de détection, la présence d'un faux contour sur au moins l'une des variables de luminance, respectivement de chrominance, de façon à définir, en fonction de l'existence d'un faux contour et de la position de chaque couple de pixels considéré, un masque des faux contours et à déterminer dans cette direction de détection, par accumulation, la présence d'une grille parasite de codage, s'étendant sensiblement périodiquement dans cette direction de détection. Un facteur de qualité des images numériques diffusées est déterminé à partir de la quantité de faux contours constituant la grille parasite.

Le procédé, objet de la présente invention, peut être mis en oeuvre dans tout domaine de transmission d'images numériques codées par blocs tel que la télédiffusion d'images de télévision ou la transmission de fichiers d'images vidéo en réseau.

Il sera mieux compris à la lecture de la description et à l'observation des dessins dans lesquels :

- la figure 1 représente un organigramme illustratif de la mise en oeuvre du procédé, objet de la présente invention ;
- la figure 2a représente, de manière illustrative, un processus spécifique de détermination de la présence de faux contours potentiels entre pixels successifs d'une image numérique, conformément au procédé objet de la présente invention ;
- les figures 2b et 2c représentent un détail de mise en oeuvre du processus illustré en figure 2a ;
- la figure 2d représente une loi de détection spatiale spécifique mise en oeuvre pour la variable de luminance permettant de déterminer l'existence d'un faux contour potentiel pour un couple de pixels successifs ;
- la figure 3a représente, de manière illustrative, une grille parasite mise en évidence selon la direction de détection, suite à un processus d'accumulation, cette grille parasite présentant un motif sensiblement périodique suivant cette direction de détection ;
- la figure 3b représente la mise en oeuvre d'un histogramme des intervalles séparant les éléments du motif sensiblement périodique représenté en figure 3a permettant de déterminer le pas de cette grille ;
- la figure 4 représente, à titre illustratif, les étapes permettant le calcul du facteur de qualité ou taux de faux contours d'une image numérique conformément au procédé objet de la présente invention.

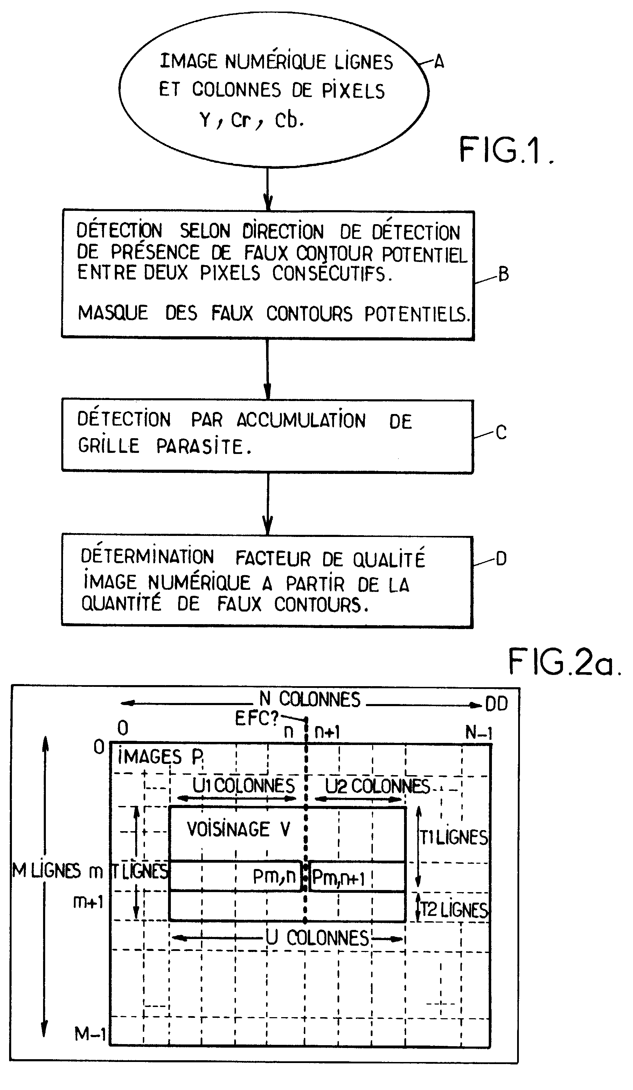

Une description plus détaillée du procédé de contrôle de la qualité d'images numériques diffusées, objet de la présente invention, sera maintenant donnée en liaison avec la figure 1.

D'une manière générale, on indique que les images numériques susceptibles d'être soumises au procédé de contrôle de qualité, conforme à l'objet de la présente invention, sont des images numériques constituées par des lignes et des colonnes de pixels d'image, chaque image numérique étant codée par blocs sous forme de pixels d'image arrangés en lignes et en colonnes. De manière classique, à chaque pixel d'image est associée une variable de luminance Y et au moins deux variables de chrominance Cr et Cb. A titre d'exemple non limitatif, on indique que ces images peuvent être constituées par des images de télévision, télédiffusées par exemple sous forme d'une trame paire et impaire au format 4:2:2.

Ces images numériques peuvent de même être constituées par des images codées conformément au protocole MPEG-2 et transmises sur un réseau comme fichier images par exemple.

Selon un aspect non limitatif du procédé, objet de la présente invention, celui-ci consiste, en une étape A telle que représentée en figure 1, à procéder dans le flux de données numériques transmises, support des images précitées, à une acquisition d'une image numérique afin de permettre la mise en oeuvre du procédé, objet de la présente invention.

**EP 0 998 149 A1**

Alors que ce dernier peut être mis en oeuvre à partir d'une simple image mémorisée, en pratique, il est préférable d'effectuer la mémorisation de quelques images successives selon un groupe d'images par exemple.

Suite à l'étape A d'acquisition d'au moins une image précédemment mentionnée, le procédé, objet de la présente invention, consiste, en une étape B, à détecter suivant une direction de détection, entre chaque couple de pixels consécutifs selon cette direction de détection, la présence d'un faux contour potentiel sur au moins l'une des variables de luminance Y et/ou variables de chrominance Cr, Cb, de façon à définir, en fonction de l'existence d'un faux contour potentiel et de la position de chaque couple de pixels considéré, un masque des faux contours potentiels.

De manière plus spécifique, on indique que la direction de détection peut correspondre, soit à la direction d'une ligne, c'est-à-dire du balayage lignes soit à la direction orthogonale à cette dernière, c'est-à-dire la direction de balayage trame dans le cas d'une image de télévision. En outre, la mise en oeuvre du procédé, objet de la présente invention, n'est pas limitée à la seule détection de la présence de faux contours potentiels sur l'une des variables précitées, cette détection pouvant être détectée sur l'ensemble de ces variables et les résultats correspondants utilisés séparément ou en combinaison. Dans ce dernier cas, une meilleure précision peut être atteinte au prix toutefois d'une augmentation du temps de calcul.

Suite à l'étape B représentée en figure 1, le procédé de contrôle de la qualité d'images numériques diffusées, objet de la présente invention, consiste à effectuer, à partir du masque des faux contours potentiels ainsi obtenu, une étape C de détection, par accumulation, de la présence d'une grille parasite sur l'image considérée.

D'une manière générale, on rappelle que cette grille parasite est engendrée suite à l'opération de codage de l'image, puis de décodage au niveau de la réception par une reconstruction imparfaite des blocs qui ont permis la mise en oeuvre du processus de codage au moyen d'une transformée DCT (transformée en cosinus discret, en anglais "Discrete Cosine Transform") par exemple.

D'une manière générale, on indique que cette grille parasite s'étend sensiblement périodiquement dans la direction de détection et que l'accumulation précitée est effectuée bien entendu dans une direction orthogonale à cette direction de détection. A la fin de l'étape C, on dispose ainsi d'un modèle de grille parasite s'étendant dans la direction de détection, ce modèle de grille parasite correspondant sensiblement à l'existence d'une grille parasite sur l'image décodée obtenue. Ainsi, la mise en évidence de l'existence d'un modèle de grille parasite à partir du masque des faux contours potentiels, ce modèle de grille parasite s'étendant sensiblement périodiquement dans au moins une direction de détection, permet d'établir l'existence d'une grille parasite de faux contours.

Enfin, l'étape C précitée est suivie d'une étape D consistant à déterminer, à partir de la quantité de faux contours constituant la grille parasite précitée, un facteur de qualité des images numériques ainsi diffusées. On comprend dans ces conditions que l'image ou le groupe d'images numériques numérisées soumis au test de contrôle de la qualité d'images numériques diffusées précédemment décrit, permet d'effectuer un contrôle par échantillonnage de la qualité effective de la diffusion des images numériques précitées.

Une description plus détaillée d'une mise en oeuvre spécifique non limitative du procédé, objet de la présente invention, sera maintenant donnée en liaison avec les figures 2a à 2c, en particulier pour ce qui concerne la mise en oeuvre de l'étape consistant à détecter la présence d'un faux contour potentiel afin d'obtenir le masque des faux contours potentiels tel que mentionné précédemment dans la description.

En référence à la figure 2a, on indique que, afin de mettre en oeuvre l'étape consistant à détecter la présence d'un faux contour potentiel entre chaque couple de pixels consécutifs selon la direction de détection, le procédé, objet de la présente invention, consiste, sur au moins un ou plusieurs alignements successifs de pixels selon cette direction de détection, à définir pour tout couple de pixels consécutifs de l'image, un domaine de voisinage borné par un nombre déterminé de lignes et de colonnes de pixels.

Sur la figure 2a, on a représenté une image, notée P, consistant en M lignes de pixels, l'indice courant de lignes étant noté $0 < m < M-1$, et N colonnes de pixels, l'indice de colonnes de pixels étant noté n avec $0 < n < N-1$. Le domaine de voisinage est noté V sur la figure 2a et il inclut le couple de pixels consécutifs courant pour lequel la présence d'un faux contour est recherchée.

Sur la figure 2a, on a noté chaque pixel en fonction de l'adresse lignes/colonnes de ce dernier, les deux pixels consécutifs étant notés $p_{m,n}$ et $p_{m,n+1}$, les deux pixels consécutifs étant réputés appartenir à la même ligne mais à deux colonnes distinctes adjacentes de rang n et n+1.

Le domaine de voisinage V, ainsi que représenté en figure 2a, peut de manière avantageuse présenter une largeur de U colonnes et une hauteur de T lignes dans l'image P considérée. Le domaine de voisinage V peut être centré ou non par rapport aux couples successifs de pixels $p_{m,n}$ ; $p_{m,n+1}$.

Par définition, et conformément au procédé, objet de la présente invention, on indique que l'effet de faux contour potentiel, noté EFC?, se situe entre les pixels consécutifs précités $p_{m,n}$ et $p_{m,n+1}$ pourvu que le contraste sur l'une des variables de luminance, respectivement de chrominance, entre ces deux pixels satisfasse, vis-à-vis d'une loi de détection, à un critère de supériorité, lequel sera décrit ultérieurement dans la description. Un tel critère constitue une condition nécessaire mais non pas suffisante, ainsi qu'il sera décrit ci-après.

En outre, on indique que, en référence à la figure 2a :

4

$T_1$ est le nombre de lignes situées dans le domaine de voisinage V et situées au-dessus du couple de pixels considérés, $T_1$ étant au moins égal à 1 et contenant ce couple ;

$T_2$ est le nombre de lignes dans le domaine de voisinage V situé au-dessous de la ligne de pixels considérés mais ne contenant pas celle-ci ;

$U_1$ est le nombre de colonnes situées dans le domaine de voisinage V et contenant le pixel $p_{m,n}$ ;

$U_2$ est le nombre de colonnes de pixels dans le domaine de voisinage V et situées à droite du pixel $p_{m,n}$ considéré.

A titre d'exemple non limitatif, les différents paramètres précités peuvent avoir la valeur ci-après :

- M = 576, nombre de lignes de pixels constitutives de l'image P ;
- N = 720, nombre de colonnes de pixels constitutives de l'image P précitée ;
- $U_1 = U_2 = 8$ ;
- $T_2 = 0$ ;
- $T_1 = 1$.

A partir de la définition des paramètres précédemment mentionnés, le procédé, objet de la présente invention, consiste à mesurer, entre les pixels précités constitutifs de ce couple de pixels consécutifs, l'écart de la variable de luminance Y, respectivement de chrominance Cr, Cb, associée à chacun de ces pixels, cet écart étant représentatif d'un effet de contraste entre les pixels $p_{m,n}$ et $p_{m,n+1}$ considérés.

Compte tenu des notations précédentes et de la définition des paramètres précités, l'image P et le domaine de voisinage V peuvent être définis par les relations matricielles ci-après :

$$P[M,N] = \begin{bmatrix} p_{0,0} & \cdots & p_{0,N-1} \\ \vdots & p_{m,n} & \vdots \\ p_{M-1,0} & \cdots & p_{M-1,N-1} \end{bmatrix},$$

avec

$$V[T,U] = \begin{bmatrix} p_{m-T1+1,n-U1+1} & \cdots & p_{m-T1+1,n+U2} \\ \vdots & p_{m,n} & \\ p_{m+T2,n-U1+1} & \cdots & p_{m+T2,n+U2} \end{bmatrix}$$

avec $T \le M$ et $U \le N$
et $T = T1 + T2$, $U = U1 + U2$.
où :

T1 est le nombre de lignes inclusif dans le voisinage V situé au-dessus du couple de pixels considéré incluant la ligne contenant ce dernier ;

T2 est le nombre de lignes dans le voisinage V situé au-dessous du couple de pixels considéré ;

U1 est le nombre de colonnes inclusif dans le voisinage V situé à gauche du couple de pixels considéré incluant le pixel gauche de ce dernier ;

U2 est le nombre de colonnes dans le voisinage V situé à droite du couple de pixels considéré incluant le pixel droit de ce dernier.

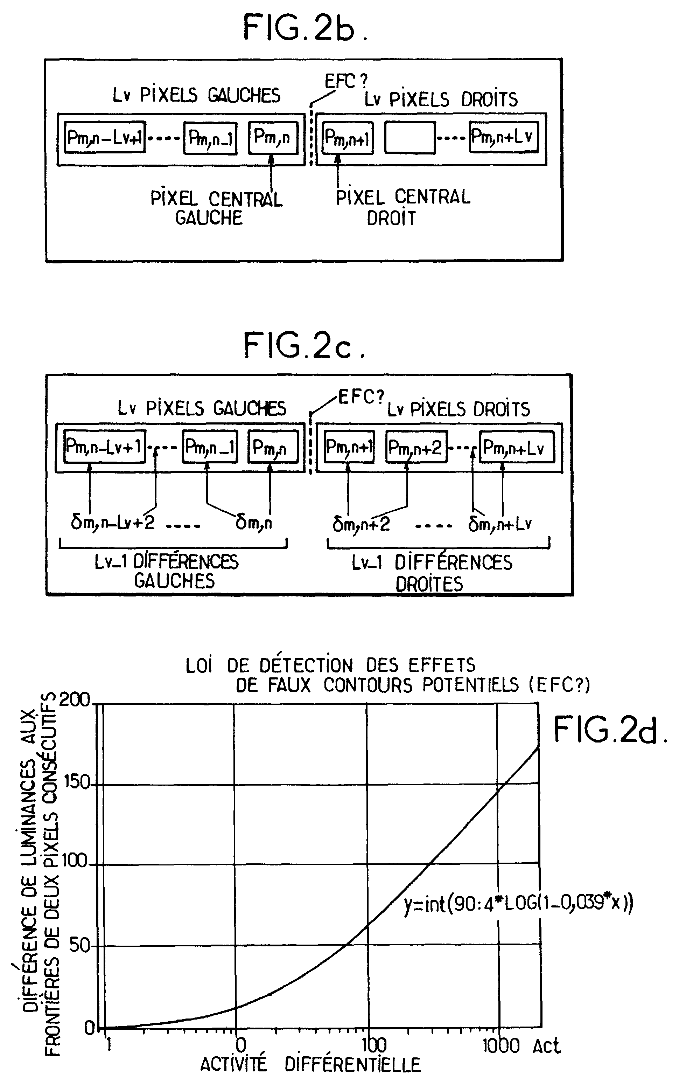

Compte tenu de cette définition, ainsi que représenté en figure 2b, le procédé objet de la présente invention, consiste en outre à mesurer, dans la direction de détection, notée DD, un paramètre d'activité spatiale relative de l'image vis-à-vis des pixels du voisinage antérieur et postérieur au couple de pixels consécutifs $p_{m,n}$ et $p_{m,n+1}$ par comparaison de la variable de luminance, respectivement de chrominance, à celle des pixels antérieurs et postérieurs à ce couple de pixels consécutifs. Ainsi que représenté sur la figure 2b, on indique que les pixels antérieurs et postérieurs sont désignés par pixels gauches, respectivement pixels droits en référence au sens de balayage ligne de gauche à droite utilisé habituellement.

A titre d'exemple non limitatif, $L_v$ désigne le nombre de pixels gauches et de pixels droits, lequel, dans l'exemple précédemment mentionné dans la description, est pris égal à $L_v = U_1 = U_2 = 8$ par exemple.

L'effet de contraste précité permet la mise en évidence d'un faux contour potentiel mais n'est pas suffisant en tant que tel afin d'effectuer une telle mise en évidence. L'écart ou contraste précité peut être mesuré à partir d'une différence absolue entre les valeurs de luminance, respectivement de chrominance, entre pixels consécutifs selon la relation (2) :

$$\Delta_{central} = \left|Y_{m,n} - Y_{m,n+1}\right|$$

ou d'une différence élevée au carré, cette différence étant représentative de l'énergie de la composante de luminance, respectivement de chrominance correspondantes, selon la relation (3) :

$$\Delta_{central} = \left(Y_{m,n} - Y_{m,n+1}\right)^2$$

Les relations (2) et (3) précédentes sont données pour la variable de luminance, mais peuvent bien entendu être mises en oeuvre pour les variables de chrominance de manière semblable.

Alors que l'opération précédente relative à la détermination du contraste n'est, en tant que telle, pas suffisante afin de mettre en évidence l'effet de faux contour potentiel, cette valeur de contraste, c'est-à-dire la valeur notée $\Delta_{central}$, est ensuite comparée aux valeurs d'une loi de détection spatiale spécifique en fonction du paramètre d'activité spatiale relative, précédemment mentionné dans la description, pour établir une variable binaire indicative de la présence, respectivement de l'absence d'un faux contour pour le couple de pixels considéré.

En référence à la figure 2c, et préalablement au calcul du paramètre d'activité spatiale, ce paramètre de calcul d'activité spatiale peut être effectué sur la différence absolue des composantes de luminance des pixels droits et gauches précédemment mentionnés.

Dans ces conditions, en référence à la figure 2c précitée, les différences absolues entre les variables de luminance des pixels contigus sont notées selon la relation (4) :

$$\delta_{m,x} = \left|Y_{m,x} - Y_{m,x-1}\right|$$

avec $n-L_v+2 \leq x \leq n+L_v$

En conséquence, et pour un calcul de variance, moment d'ordre 2 de la différence des valeurs des différences absolues précitées, des valeurs d'activité différentielle sont définies pour l'activité différentielle gauche, notée $Act_{gm}$, et d'activité différentielle droite, notée $Act_{dm}$, selon la relation (5) :

$$Act_{gm} = \frac{1}{L_v - 1} \sum_{x=n-Lv+2}^{n} \left(\delta_{m,x} - \overline{\delta}_{gm}\right)^2$$

$$Act_{dm} = \frac{1}{L_v - 1} \sum_{x=n+2}^{n+Lv} \left(\delta_{m,x} - \overline{\delta}_{dm}\right)^2$$

avec :

$$\overline{\delta}_{gm} = \frac{1}{L_v - 1} \sum_{x=n-Lv+2}^{n} \delta_{m,x} \,, \quad \overline{\delta}_{dm} = \frac{1}{L_v - 1} \sum_{x=n+2}^{n+Lv} \delta_{m,x}$$

En référence aux relations 4 et 5, on indique que les calculs des paramètres d'activité spatiale précité, à gauche et à droite, sont établis à seul titre d'exemple sur la différence absolue des composantes de luminance Y, mais que ces paramètres peuvent également être établis à partir des variables de chrominance précédemment mentionnées dans la description.

A partir des paramètres d'activité spatiale à droite et à gauche $Act_{gm}$ et $Act_{dm}$, il est alors avantageux de calculer un paramètre d'activité spatiale moyenne, noté $Act_{moym}$, selon la relation (6) donnée ci-après :

$$Act_{moym} = \frac{1}{2}\ (Act_{gm} + Act_{dm})$$

L'effet de faux contour est alors réellement significatif pour le couple de pixels consécutifs correspondant si la différence centrale $\Delta_{central}$ donnée par la relation (2) ou la relation (3) est supérieure à une loi de détection spécifique établie expérimentalement.

Dans un mode de réalisation non limitatif, la loi de détection vérifiait la relation (7) :

$$L_c = \alpha + \beta \times \log_{10}(1 + \mu \times Act_{moym})$$

$$\Delta_{central} \geq L_c \Rightarrow \text{Effet de faux contour potentiel existe}$$

Une telle loi de détection est représentée en figure 2d pour le paramètre de luminance, l'axe des abscisses étant gradué en valeurs d'activité spatiale différentielle et l'axe des ordonnées en différences de variables de luminances aux frontières des deux pixels consécutifs.

Dans la relation (7) précitée, on indique que les paramètres $\alpha$, $\beta$ et $\mu$ avaient pour valeur, à titre expérimental :
$\alpha = 0,5$      $\beta = 90$      $\mu = 0,0392$.
En fait, les paramètres $\alpha$, $\beta$ et $\mu$ précités peuvent être déterminés expérimentalement avec les valeurs suivantes :

$$0,4 < \alpha < 0,6$$

$$80 < \beta < 100$$

$$0 < \mu < 0,05$$

En référence à la relation (7) précitée, la variable binaire indicative de la présence, respectivement de l'absence de faux contour potentiel pour le couple de pixels considéré est ainsi déterminée pour la différence $\Delta_{central} \geq L_c$, valeur de la loi de détection, l'effet de faux contour potentiel étant ainsi mis en évidence pour le couple de pixels consécutifs précité.

Bien entendu, le processus correspondant de détection de la présence d'un faux contour potentiel entre chaque couple de pixels consécutifs, selon la direction de détection, peut alors être répété pour tous les pixels consécutifs de l'image, c'est-à-dire pour chaque ligne d'image successivement, afin d'établir un masque des faux contours potentiels pour l'image considérée.

En pratique et afin de ne pas surcharger inutilement le processus de calcul de l'ensemble, le masque des faux contours potentiels peut être établi pour l'image P à l'exception de deux bandes de largeur $L_{v-1}$ et de hauteur M lignes situées aux extrémités droite et gauche de l'image lorsque la direction de détection correspond à celle d'une direction de balayage lignes, ainsi que décrit précédemment dans la description.

Compte tenu de la notation de l'image P et également du domaine de voisinage V donné dans la relation (1) précédente, la matrice des faux contours potentiels présumés vérifie alors la relation (8) :

$$Mat[M, N] = \begin{bmatrix} a_{0,0} & & a_{0,N-1} \\ & a_{m,n} & \\ a_{M-1,0} & & a_{M-1,N-1} \end{bmatrix}$$

où les coefficients de cette matrice sont définis par :

si $L_v < n < N-L_v$ alors

$$a_{m,n} = \begin{cases} 1 \text{ si } \Delta_{central} \geq L_c \\ 0 \text{ sinon} \end{cases}$$

sinon $a_{m,n} = 0$

avec $0 < m < M$ Dans la relation (8) précitée, on indique que les coefficients de la matrice correspondent à des valeurs binaires représentatives de l'existence ou de la non-existence d'un faux contour potentiel pour le couple de pixels consécutifs considéré.

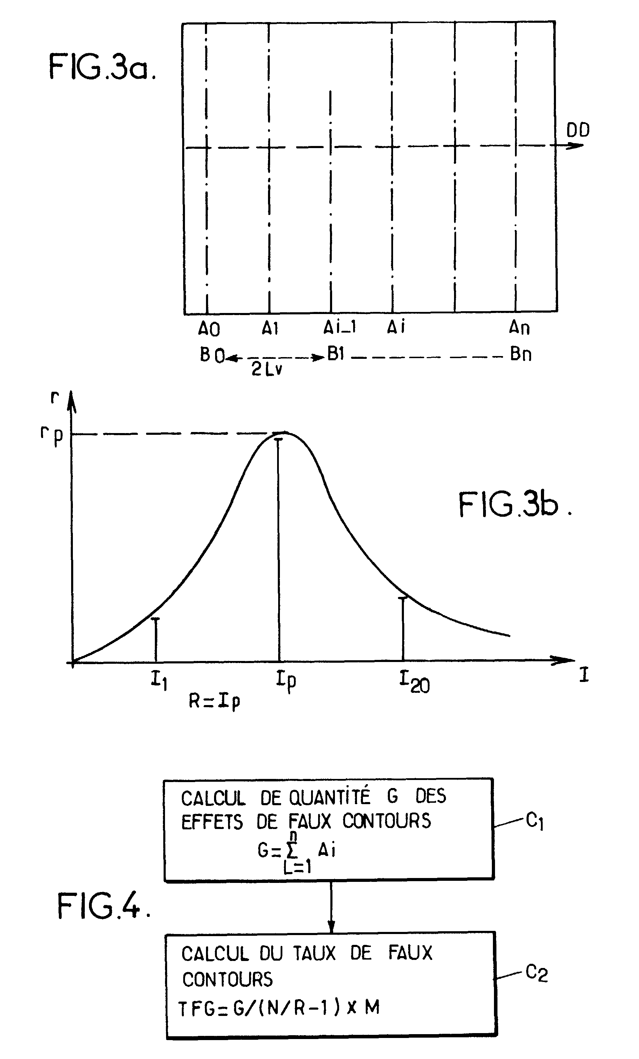

L'étape consistant à déterminer, dans la direction de détection, par accumulation, la présence d'une grille parasite de codage, succession de faux contours, sera maintenant décrite en liaison avec les figures 3a et 3b.

D'une manière plus spécifique, on indique que cette étape, l'étape C représentée en figure 1, consiste, de manière avantageuse, à déterminer, sur une direction perpendiculaire à la direction de détection DD, par accumulation de l'ensemble des variables binaires indicatives de la présence, respectivement de l'absence de faux contours potentiels pour tous les alignements de pixels dans la direction de détection précitée, un vecteur de dimension N, N étant représentatif du nombre d'alignements de pixels dans la direction de détection DD, ce vecteur constituant l'ensemble des valeurs accumulées de faux contours potentiels.

Dans ces conditions, l'opération d'accumulation vérifie la relation (9) :

$$A_n = \sum_{m=0}^{M-1} a_{m,n}$$

avec $0 \leq n < N-1$

Chaque composante $A_n$ représente ainsi la somme dans la direction perpendiculaire à la direction de détection DD des coefficients de la matrice du masque des faux contours potentiels vérifiant la relation (8) précédemment mentionnée dans la description.

Une représentation schématique de ces valeurs accumulées en une grille sensiblement périodique est donnée en figure 3a, la grille sensiblement périodique illustrative de la grille parasite étant représentée à dessein en trait mixte, en raison du caractère non absolument régulier de cette dernière dans la direction perpendiculaire à la direction de détection DD.

Enfin, une opération de mise en évidence des faux contours potentiels peut consister à déterminer les indices ou rangs de ces alignements de pixels par comparaison des composantes du vecteur défini par la relation (9), les composantes $A_n$, vis-à-vis d'une valeur de seuil.

A titre d'exemple non limitatif, on indique que la valeur de seuil est un seuil absolu, fonction de la moyenne arithmétique des composantes $A_n$ du vecteur précité. La valeur de seuil peut dans ces conditions vérifier la relation (10) ci-après :

$$S = \frac{1}{N-2} \sum_{n=0}^{N-2} A_n$$

La comparaison à la valeur de seuil précitée permet de supprimer une partie du bruit de fausse détection grâce à la comparaison des composantes $A_n$ à la valeur de seuil S.

Grâce à la mise en oeuvre de la comparaison précitée à la valeur de seuil, on obtient un vecteur seuillé B, c'est-à-dire de composantes $B_n$ comparées à une valeur de seuil, dans lequel les faux contours potentiels ont été discriminés vis-à-vis des fausses détections.

Les composantes $B_n$ du vecteur seuillé B vérifient alors la relation (11) :

$$B_n = A_n \text{ si } A_n \rangle S$$
$$B_n = 0 \text{ si non} \qquad \text{avec } 0 \leq n < N-1$$

En outre, à partir du vecteur B précité, un filtrage est effectué consistant à conserver les composantes $B_n$ d'indice correspondant ayant une occurrence maximale espacée au moins de la taille 2 x $L_v$, c'est-à-dire du voisinage de calcul du paramètre d'activité spatiale relative. Dans ces conditions, le filtrage précité permet de sélectionner les k composantes $B_n$ du vecteur B respectant la condition suivante sur l'indice n selon la relation (12) :

$$B_{nk} \rangle... \rangle B_{ni} \rangle..... \rangle B_{n1} \text{ tel que } |n_i - n_{i-1}| \rangle L_v - 1$$

avec $B_{nk} = \text{Max}(\{B_n\})$
        et $1 \leq i \leq k$

Dans un exemple de réalisation, le nombre k était pris égal à 90.

Compte tenu des opérations de comparaison à la valeur de seuil S selon la relation (10) et la relation (11), et de filtrage spatial selon la relation (12), on peut ainsi conserver les composantes d'indice déterminé du vecteur A de composante $A_n$ présentant une occurrence maximale espacée d'une distance au moins égale à la somme du voisinage antérieur et postérieur du couple de pixels consécutifs.

A la fin de l'étape B ainsi mise en oeuvre, on dispose effectivement des indices de grille représentatifs de l'existence de faux contours potentiels effectifs espacés au moins de la taille de $L_v$.

Bien entendu, le procédé objet de la présente invention comporte en outre une étape de détermination du pas de la grille parasite précitée à partir des indices ou rang des alignements de pixels représentatifs des faux contours potentiels, selon le vecteur B de composante $B_n$.

Ainsi que représenté en particulier en figure 3b, le procédé, objet de la présente invention, peut consister alors à établir un histogramme des intervalles d'indices correspondant à la différence entre deux indices consécutifs des composantes du vecteur B précité. L'histogramme précité est noté $H_{int}$. Il correspond à l'ensemble des intervalles $I_i$ vérifiant la relation (13) :

$$I_i = n_i - n_{i-1}$$

$$H_{int} = \{I_i\}$$

avec $1 \leq i \leq k$

Le pas R de la grille parasite peut alors être défini et déterminé à partir d'une loi de répartition, telle qu'une loi de Poisson représentée en figure 3b, sur laquelle l'abscisse est graduée en valeur d'intervalles $I_i$ et l'axe des ordonnées en nombre d'intervalles de valeur correspondante, le pas R de la grille parasite étant défini comme l'intervalle de rang donné $I_p$ pour lequel la loi de répartition présente sensiblement un maximum $r_p$.

D'une manière générale, on indique que la loi de répartition précitée vérifie la relation (14) :

$$r_i = \left( \frac{\exp^{-m} \times m - \dfrac{I_i}{\sigma}}{.. \qquad i!} \right)$$

avec $L_v \leq i \leq 2 L_v$

et

$$m = \frac{N - 2L_v - 1}{\sigma}, \sigma = \sum_{i=1}^{4Lv} Ii$$

$R = I_p$ tel que $r_p = Max(r_i)$ avec $r_p > \alpha$

Dans la relation précédente, on indique que :

$r_i$    désigne la fonction de répartition (loi de Poisson) pour chaque intervalle $I_i$ considéré ;
i    représente l'indice d'un intervalle ;
$\sigma$    représente le nombre d'intervalles sur la largeur de l'image ;
$I_i$    représente un intervalle de rang considéré i.

En ce qui concerne la valeur de $\alpha$, on indique que ce paramètre est déterminé expérimentalement et peut être pris égal à $\alpha = 0,1$.

Lorsque l'occurrence rp maximale est inférieure à la valeur de $\alpha = 0,1$, on indique que le procédé, objet de la présente invention, ne permet pas de conclure à la présence d'une grille parasite.

Suite à la détermination du pas R de la grille parasite précitée, et compte tenu des composantes $A_i$ du vecteur A précité, il est alors possible, à partir du vecteur B ayant satisfait au processus de filtrage spatial, et en particulier de la première valeur d'indice de la composante $B_{n0}$ de celui-ci, de déterminer un vecteur T représentatif de la grille parasite correspondante. Le vecteur T vérifier la relation (15) :

$$T_n = \begin{bmatrix} n_0 \\ . \\ n_i \\ . \\ n_2 \end{bmatrix}$$

avec $0 \leq i \leq n$
tel que $|n_i - n_{i-1}| = R$

Un mode de réalisation particulier non limitatif de calcul du facteur de qualité des images numériques diffusées conforme à l'objet de la présente invention, sera maintenant décrit en liaison avec la figure 4.

Le vecteur T précité est le vecteur des indices spécifiques de la grille parasite dont le pas est sensiblement égal à la valeur R.

Compte tenu de ces indices spécifiques, l'étape de détermination du facteur de qualité peut consister avantageusement à calculer, en une étape $C_1$, la quantité G des effets de faux contours, cette quantité G n'étant autre que le cumul des composantes $A_i$ du vecteur A précité, sommé sur l'ensemble des indices spécifiques défini par le vecteur T. Ainsi, la quantité de faux contours G vérifie la relation (16) ci-après :

$$G = \sum_{i=0}^{n} A_i$$

On comprend ainsi que, compte tenu du filtrage spatial et de la discrimination des faux contours grâce aux paramètres de pas de grille R, la quantité G des effets de faux contours représente bien la contribution de la grille parasite à la perception visuelle d'un observateur de l'image.

Suite à l'étape Ci précitée, le procédé, objet de la présente invention, peut comporter ensuite une étape $C_2$ consistant à calculer le facteur de qualité de l'image numérique, ce facteur de qualité étant défini comme un taux de faux contours, noté TFC, pour l'image considérée et vérifiant la relation (17) :

$$TFC = \frac{G}{W}$$

avec

$$W = \left(\frac{N}{R} - 1\right) \times M$$

Dans cette relation :

W   représente le nombre de faux contours maximum théorique le long d'une grille dans la direction de détection DD pour l'image considérée, ce nombre W étant égal à

$$W = \left(\frac{N}{R} - 1\right) \times M \quad ;$$

N   représente le nombre de points ou de colonnes dans l'image considérée ;
R   représente le pas de la grille déterminé précédemment ;
M   représente le nombre de pixels dans la direction orthogonale à la direction de la détection.

Le facteur de qualité précité TFC représente ainsi la somme des effets de faux contours normalisés sur l'image considérée.

On a ainsi décrit un procédé de contrôle de la qualité d'images numériques diffusées particulièrement performant, dans la mesure où s'écartant des procédés d'analyse et de contrôle de l'art antérieur, celui-ci permet un contrôle de qualité en temps réel, le temps de calcul pouvant être rendu sensiblement inférieur à celui de la durée d'une image ou de la fréquence image d'images de télévision, alors que, d'autre part, ce contrôle de qualité peut être réalisé en l'absence de toute perturbation du service de télédiffusion par exemple. En outre, un autre point particulièrement remarquable consiste en ce que le processus de contrôle est réalisé en l'absence de toute image de référence. En conséquence, le procédé, objet de la présente invention, peut être mis en oeuvre pour la surveillance de la diffusion ou de la télédiffusion d'images TV alors que le facteur de qualité établi est représentatif de la qualité finale des séquences d'images diffusées.

**Revendications**

**1.**   Procédé de contrôle de la qualité d'images numériques diffusées, chaque image numérique étant codée par blocs sous forme de pixels d'image arrangés en lignes et en colonnes de pixels d'image, à chaque pixel d'image étant associée une variable de luminance et au moins deux variables de chrominance, caractérisé en ce que ledit procédé consiste au moins :

   -   à détecter, suivant au moins une direction de détection, entre chaque couple de pixels consécutifs selon cette direction de détection, la présence d'un faux contour potentiel sur au moins l'une des variables de luminance, respectivement de chrominance, de façon à définir en fonction de l'existence d'un faux contour potentiel et de la position de chaque couple de pixels considéré un masque des faux contours potentiels ;
   -   à déterminer, dans cette direction de détection, par accumulation, la présence d'une grille parasite de codage, succession de faux contours, s'étendant sensiblement périodiquement dans cette direction de détection ;
   -   à déterminer, à partir de la quantité de faux contours constituant ladite grille parasite, un facteur de qualité des images numériques diffusées.

**2.**   Procédé selon la revendication 1, caractérisé en ce que ladite étape consistant à détecter la présence d'un faux contour potentiel entre chaque couple de pixels consécutifs selon la direction de détection, consiste, sur au moins un ou plusieurs alignements successifs de pixels selon la direction de détection :

- à définir, pour tout couple de pixels consécutifs de l'image, un domaine de voisinage borné par un nombre déterminé de lignes et de colonnes de pixels, ledit domaine de voisinage incluant ledit couple de pixels consécutifs ;
- à mesurer, entre les pixels constitutifs de ce couple de pixels consécutifs, l'écart de la variable de luminance respectivement de chrominance associée à chacun de ces pixels, cet écart étant représentatif d'un effet de contraste entre ces pixels consécutifs ;
- à mesurer, dans la direction de détection, un paramètre d'activité spatiale relative de l'image vis-à-vis des pixels du voisinage antérieur et postérieur au couple de pixels consécutifs par comparaison de la variable de luminance des pixels antérieurs et postérieurs à ce couple de pixels consécutifs ;
- à établir, à partir d'une comparaison de l'écart de la variable de luminance respectivement de chrominance et d'une loi de détection spatiale spécifique en fonction de ce paramètre d'activité spatiale relative, une variable binaire indicative de la présence respectivement de l'absence d'un faux contour potentiel pour le couple de pixels considéré ;
- à établir pour l'ensemble de l'image, pour chaque couple de pixels consécutifs, ledit masque des faux contours potentiels de l'image.

3. Procédé selon l'une des revendications 1 ou 2, caractérisé en ce que l'étape consistant à déterminer par accumulation, dans la direction de détection, la présence d'une grille parasite de codage comprend au moins, à partir du masque des faux contours potentiels, les étapes consistant à :

- déterminer par accumulation, sur une direction perpendiculaire à ladite direction de détection, de l'ensemble des variables binaires indicatives de la présence respectivement de l'absence de faux contours potentiels pour tous les alignements de pixels dans cette direction de détection, l'ensemble des valeurs accumulées constituant un vecteur de dimension N, N étant représentatif du nombre d'alignement de pixels dans ladite direction de détection ;
- déterminer les indices ou rang de ces alignements de pixels par comparaison des composantes dudit vecteur vis-à-vis d'une valeur de seuil pour lesquels un faux contour potentiel s'étend sur cet alignement de pixels dans ladite direction perpendiculaire, ce qui permet de conserver les composantes d'indice déterminé présentant une occurrence maximale espacées d'une distance au moins égale à la somme du voisinage antérieur et postérieur au couple de pixels consécutifs.

4. Procédé selon la revendication 3, caractérisé en ce que celui-ci comporte en outre une étape de détermination du pas de la grille parasite consistant, à partir des indices ou rang de ces alignements de pixels :

- à établir un histogramme des intervalles d'indices correspondant à la différence entre deux indices consécutifs

$$I_i = n_i - n_{i-1}$$

$$H_{int} = \{I_i\}$$

- à déterminer, à partir d'une loi de répartition desdits intervalles, le pas R de la grille parasite défini comme l'intervalle de rang donné pour lequel ladite loi de répartition présente un maximum.

5. Procédé selon les revendications 3 et 4, caractérisé en ce que ladite étape consistant à déterminer les indices ou rang des alignements de pixels dans la direction de détection consiste, à partir des indices des composantes dudit vecteur, à discriminer les indices spécifiques dont le pas est sensiblement égal à la valeur R.

6. Procédé selon l'une des revendications 1 à 5, caractérisé en ce que l'étape consistant à déterminer ledit facteur de qualité des images numériques diffusées consiste, à partir desdits indices spécifiques :

- à calculer la quantité G des effets de faux contours, ladite quantité vérifiant la relation :

$$G = \sum_{i=0}^{n} A_i$$

$A_i$ désignant les composantes du vecteur de dimension N constitué par l'ensemble des valeurs accumulées ;

- à calculer ledit facteur de qualité défini comme un taux de faux contours TFC pour l'image considérée, le taux de faux contours vérifiant la relation :

$$TFC = G/W$$

relation selon laquelle

W représente le nombre de faux contours théoriques maximum sur l'image dans la direction de détection, avec

$$W = \left(\frac{N}{R} - 1\right) \times M$$

N représentant le nombre de pixels dans la direction de détection ;

R représentant le pas de la grille parasite ;

M représentant nombre de pixels dans la direction orthogonale à la direction de détection.

IMAGE NUMÉRIQUE LIGNES
ET COLONNES DE PIXELS
Y, Cr, Cb. — A

# FIG.1.

DÉTECTION SELON DIRECTION DE DÉTECTION
DE PRÉSENCE DE FAUX CONTOUR POTENTIEL
ENTRE DEUX PIXELS CONSÉCUTIFS.

MASQUE DES FAUX CONTOURS POTENTIELS. — B

DÉTECTION PAR ACCUMULATION DE
GRILLE PARASITE. — C

DÉTERMINATION FACTEUR DE QUALITÉ
IMAGE NUMÉRIQUE A PARTIR DE LA
QUANTITÉ DE FAUX CONTOURS. — D

# FIG.2a.

## FIG.2b.

Lv PIXELS GAUCHES  EFC ?  Lv PIXELS DROITS

| Pm,n−Lv+1 | ---- | Pm,n_1 | Pm,n | | Pm,n+1 | | ---- | Pm,n+Lv |

PIXEL CENTRAL
GAUCHE

PIXEL CENTRAL
DROIT

## FIG.2c.

Lv PIXELS GAUCHES  EFC?  Lv PIXELS DROITS

| Pm,n−Lv+1 | --- | Pm,n_1 | Pm,n | | Pm,n+1 | Pm,n+2 | --- | Pm,n+Lv |

$\delta$m,n−Lv+2 .... $\delta$m,n     $\delta$m,n+2 .... $\delta$m,n+Lv

Lv_1 DIFFÉRENCES
GAUCHES

Lv_1 DIFFÉRENCES
DROITES

LOI DE DÉTECTION DES EFFETS
DE FAUX CONTOURS POTENTIELS (EFC?)

## FIG.2d.

$y = \mathrm{int}(90 : 4 * \mathrm{LOG}(1 - 0{,}039 * x))$

DIFFÉRENCE DE LUMINANCES AUX
FRONTIÈRES DE DEUX PIXELS CONSÉCUTIFS

200
150
100
50
0

1     0     100     1000  Act

ACTIVITÉ DIFFÉRENTIELLE

FIG.3a.

$A0$  $A1$  $Ai_1$  $Ai$  $An$

$B0 \leftarrow \overrightarrow{\phantom{2Lv}} B1 - - - - - - Bn$
$2Lv$

FIG.3b.

$r_p$

$I_1$  $I_p$  $I_{20}$  $I$

$R = I_p$

FIG.4.

CALCUL DE QUANTITÉ G DES
EFFETS DE FAUX CONTOURS
$$G = \sum_{L=1}^{n} Ai$$ — $C_1$

CALCUL DU TAUX DE FAUX
CONTOURS
$TFG = G/(N/R-1) \times M$ — $C_2$

| Office européen des brevets | **RAPPORT DE RECHERCHE EUROPEENNE** | Numéro de la demande EP 99 40 2620 |
|---|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 0 797 349 A (SAMSUNG ELECTRONICS CO LTD) 24 septembre 1997 (1997-09-24) * abrégé * * page 3, ligne 19 - page 4, ligne 28 * | 1,2 | H04N7/30 H04N17/00 |
| A | EP 0 781 053 A (LUCENT TECHNOLOGIES INC) 25 juin 1997 (1997-06-25) * page 4, colonne 6, ligne 20 - page 6, colonne 9, ligne 45 * | 1 | |
| A | LIU C -M ET AL: "OBJECTIVE IMAGE QUALITY MEASURE FOR BLOCK-BASED DCT CODING" IEEE TRANSACTIONS ON CONSUMER ELECTRONICS, vol. 43, no. 3, 1 août 1997 (1997-08-01), pages 511-516, XP000742525 * alinéa '0OII! * | 1,2 | |
| A | CHEN J -L ET AL: "An efficient algorithm for form structure extraction using strip projection" PATTERN RECOGNITION, vol. 31, no. 9, 1 septembre 1998 (1998-09-01), page 1353-1368 XP004127719 * alinéa '0002! * * alinéa '0003! * | 1,3,4 | DOMAINES TECHNIQUES RECHERCHES (Int.Cl.7) H04N |
| A | VISWANATHAN M ET AL: "CHARACTERISTICS OF DIGITIZED IMAGES OF TECHNICAL ARTICLES" MACHINE VISION APPLICATIONS IN CHARACTER RECOGNITION AND INDUSTRIAL INSPECTION, SAN JOSE, FEB. 10 - 12, 1992, pages 6-17, XP000633697 D'AMATO D P;ET AL (EDS ) * alinéa '0001! * * figures 4,5; tableau 3 * | 1,3,4 | |

Le présent rapport a été établi pour toutes les revendications

| Lieu de la recherche LA HAYE | Date d'achèvement de la recherche 31 janvier 2000 | Examinateur Marie-Julie, J-M |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................
& : membre de la même famille, document correspondant

EPO FORM 1503 03.82 (P04C02)